# EUROPEAN PATENT SPECIFICATION

(11) **EP 4 040 766 B1**
(45) Date of publication and mention of the grant of the patent: **09.04.2025**
(21) Application number: 22154486.9
(22) Date of filing: 01.02.2022
(51) Int. Cl.: H04N 1/00, G06F 3/12, G06F 3/16, G06F 9/451

(54) **INFORMATION PROCESSING APPARATUS, METHOD OF CONTROLLING SAME, AND STORAGE MEDIUM**
INFORMATIONSVERARBEITUNGSVORRICHTUNG, VERFAHREN ZUR STEUERUNG DAVON UND SPEICHERMEDIUM
APPAREIL DE TRAITEMENT D'INFORMATIONS, PROCÉDÉ DE COMMANDE ASSOCIÉ ET SUPPORT D'INFORMATIONS

(30) Priority: 08.02.2021 JP 2021018368
(43) Date of publication of application: 10.08.2022
(73) Proprietor: CANON KABUSHIKI KAISHA, OHTA-KU Tokyo 146-8501 (JP)
(72) Inventor: OMORI, Seiya, Tokyo, 146-8501 (JP)
(74) Representative: Canon Europe Limited

(56) References cited:
- CN-A- 111 756 944
- JP-A- 2006 085 351
- JP-A- 2016 117 158
- JP-B2- 4 819 560

## Description

### BACKGROUND OF THE INVENTION

### Field of the Invention

The present invention relates to a display method for an information processing apparatus.

### Description of the Related Art

An information processing apparatus, such as a smartphone and a multifunctional peripheral (MFP), includes various applications, and displays a plurality of software keys to execute the respective applications on a menu screen. For example, the applications held by the MFP include a copy application, a facsimile application, and a print application to print data from a personal computer (PC). When the number of software keys displayed on the screen is increased, it is difficult for a user to find a desired software key. A technique to automatically rearrange the software keys displayed on the menu screen based on a state of an apparatus has been proposed (Japanese Patent Application Laid-Open No. 2016-117158), accordingly. For example, in a case where a document of a specific sheet size is placed on a scanner of the MFP, software keys to process the document are rearranged at top positions in the menu screen. As a result, the user can easily find the desired software key in the menu screen.

Automatic rearrangement of the software keys thus improves operability for the user. However, automatic rearrangement of the software keys may deteriorate operability for a user who uses the apparatus without viewing the screen, such as a blind person and a person with low vision. This is because the user who uses the apparatus without viewing the screen memorizes positions and an arrangement order of the software keys, and selects the desired software key by using a cursor or the like based on the memory.

JP 4819560 B2 discloses an information processing apparatus wherein all icons on a display can be re-arranged according to a frequency of use, with the possibility to display certain icon at arbitrary positions to facilitate access to a visually impaired user.

### SUMMARY OF THE INVENTION

The present invention is directed to a method that prevents, in an apparatus that automatically rearranges software keys on a screen, operability from being deteriorated for a user who uses the apparatus without viewing the screen. The invention is defined by the independent claims. The dependent claims define particular embodiments.

According to a first aspect of the present invention, there is provided an information processing apparatus as specified in claims 1 to 16. According to a second aspect of the present invention, there is provided a method of controlling an information processing apparatus as specified in claim 17. According to a third aspect of the present invention, there is provided a storage medium as specified in claim 18.

Further features of the present invention will become apparent from the following description of exemplary embodiments with reference to the attached drawings.

### BRIEF DESCRIPTION OF THE DRAWINGS

Fig. 1 is a block diagram illustrating a hardware configuration of an image processing apparatus according to an exemplary embodiment of the present invention.
Fig. 2 is a block diagram illustrating a software configuration of the image processing apparatus according to the exemplary embodiment of the present invention.
Fig. 3 is a diagram illustrating examples of a button information table illustrating information associated with buttons according to the exemplary embodiment of the present invention.
Fig. 4 is a diagram illustrating a screen example of an application selection screen in which buttons are not rearranged, displayed on a display/operation unit of the image processing apparatus according to the exemplary embodiment of the present invention.
Figs. 5A to 5C are diagrams each illustrating a screen example of the application selection screen in which the buttons are rearranged, displayed on the display/operation unit of the image processing apparatus according to the exemplary embodiment of the present invention.
Fig. 6 is a flowchart illustrating processing to rearrange the buttons in the application selection screen based on a state of the image processing apparatus according to the exemplary embodiment of the present invention.
Fig. 7 is a diagram illustrating association of a state of the image processing apparatus and a screen displayed on the display/operation unit of the image processing apparatus based on the state, according to the exemplary embodiment of the present invention.
Figs. 8A and 8B are diagrams each illustrating a screen example displayed on the display/operation unit of the image processing apparatus according to the exemplary embodiment of the present invention.
Fig. 9 is a flowchart illustrating processing based on whether a voice reading function of the image processing apparatus is enabled, according to the exemplary embodiment of the present invention.
Fig. 10 is a diagram illustrating a screen example of an application selection screen in which the buttons are not rearranged, displayed on the display/operation unit of the image processing apparatus according to the exemplary embodiment of the present invention.
Fig. 11 illustrates an application selection screen displayed on the display/operation unit of the image processing apparatus in a case where the voice reading function is started, according to the exemplary embodiment of the present invention.
Fig. 12 is a flowchart illustrating display screen switching processing at a start of the voice reading function in the image processing apparatus that provides two types of application selection screens, according to the exemplary embodiment of the present invention.

### DESCRIPTION OF THE EMBODIMENTS

Some exemplary embodiments of the present invention are described in detail below with reference to accompanying drawings. In the exemplary embodiments, an image processing apparatus is described as an example of an information processing apparatus; however, the exemplary embodiments do not limit the present invention according to claims. Further, all of combinations of features described in the exemplary embodiments are not necessarily essential for solving means of the present invention.

Exemplary embodiments of the present invention is described below with reference to drawings.

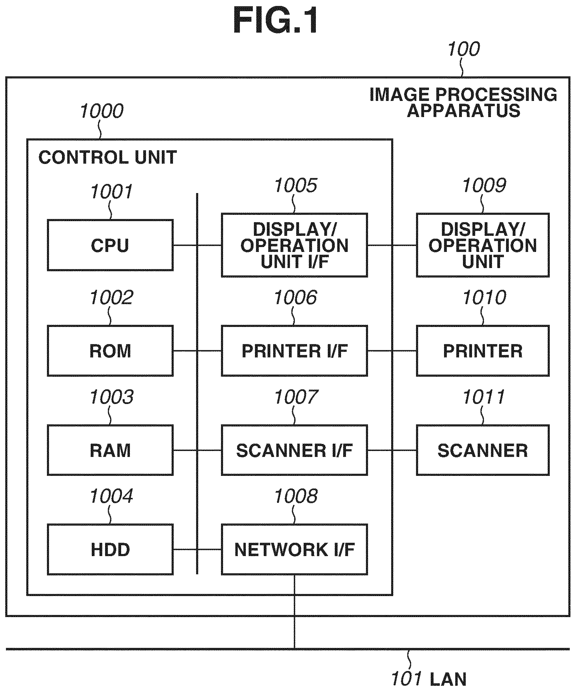

Fig. 1 is a block diagram illustrating a hardware configuration of an image processing apparatus 100 according to a first exemplary embodiment of the present invention. A control unit 1000 including a central processing unit (CPU) 1001 controls operation of the entire image processing apparatus 100.

The CPU 1001 reads out control programs stored in a read only memory (ROM) 1002, and performs various kinds of control such as reading control and transmission control. The ROM 1002 is a boot ROM, and stores a boot program of a system. A random access memory (RAM) 1003 is used as a temporary storage area for, for example, a main memory and a work area of the CPU 1001. A hard disk drive (HDD) 1004 stores image data, various kinds of programs, or various kinds of information tables.

A display/operation unit interface (I/F) 1005 is an interface to connect a display/operation unit 1009 and the control unit 1000. The display/operation unit 1009 includes a display having a touch panel function, and a keyboard. The display/operation unit 1009 further includes hardware keys to operate the image processing apparatus 100.

A printer I/F 1006 is an interface to connect a printer 1010 and the control unit 1000. Image data to be printed by the printer 1010 is transferred from the control unit 1000 through the printer I/F 1006, and is printed on a recording medium (sheet) by the printer 1010.

A scanner I/F 1007 is an interface to connect a scanner 1011 and the control unit 1000. The scanner 1011 reads an image on a document to generate image data, and inputs the image data to the control unit 1000 through the scanner I/F 1007.

A network I/F 1008 is an interface to connect the control unit 1000 to a local area network (LAN) 101. The network I/F 1008 transmits and receives information to and from an external apparatus connected to a network through the LAN 101. Examples of the external apparatus include an information processing apparatus, a personal computer (PC), and a mobile terminal. A form of the LAN 101 is typically a wired LAN or a wireless LAN; however, the form of the LAN 101 is not limited thereto.

Representative functions held by the image processing apparatus 100 are as follows.
- A "copy" function to print, by the printer 1010, image data generated through document reading by the scanner 1011
- A "print" function to print, by the printer 1010, image data based on a print job input from an external apparatus such as an information processing apparatus connected to a network via the network I/F 1008
- A "scan and transmission" function to transmit image data generated through document reading by the scanner 1011, to the outside via the network I/F 1008
- A "scan and storage" function to store image data generated through document reading by the scanner 1011, in the HDD 1004
- A "use of stored file" function to print image data stored in the HDD 1004 by the printer 1010, or transmit image data stored in the HDD 1004 to the outside via the network I/F 1008
Application buttons to execute respective applications configured to execute such functions are displayed on an application selection screen.

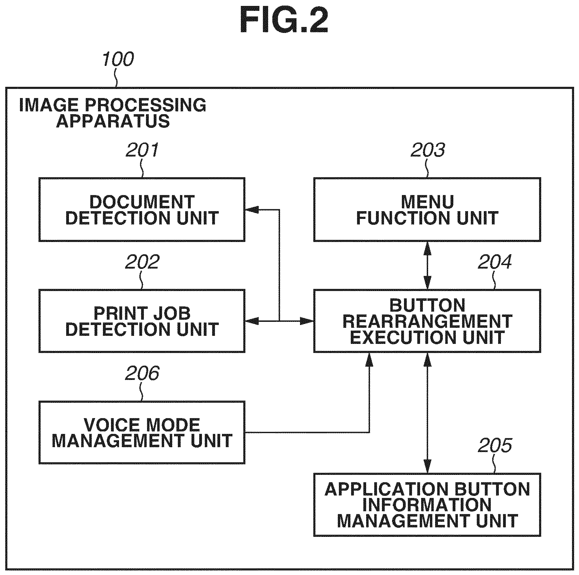

Fig. 2 is a block diagram illustrating a software configuration of the image processing apparatus 100 according to the exemplary embodiment of the present invention. Software is stored in the ROM 1002 and is executed by the CPU 1001.

A document detection unit 201 holds a state indicating whether a document is placed on the scanner 1011 of the image processing apparatus 100. A state where a document is placed on the scanner 1011 indicates, for example, a state where a document is placed on a feeder of the image processing apparatus 100, a state where a document is placed on a pressing plate of the image processing apparatus 100, and a state where the pressing plate is opened. The state where the document is placed on the scanner 1011 is not limited thereto.

A print job detection unit 202 determines a state whether a print job having been input from the external apparatus to the image processing apparatus 100 via the LAN 101 and having not been executed is present. The print job is not limited to the print job not yet executed, and the print job detection unit 202 may determine whether a print job waiting for execution is present. The print job detection unit 202 performs the determination by detecting whether a print job is stored in the image processing apparatus 100 or an external server communicable with the image processing apparatus 100.

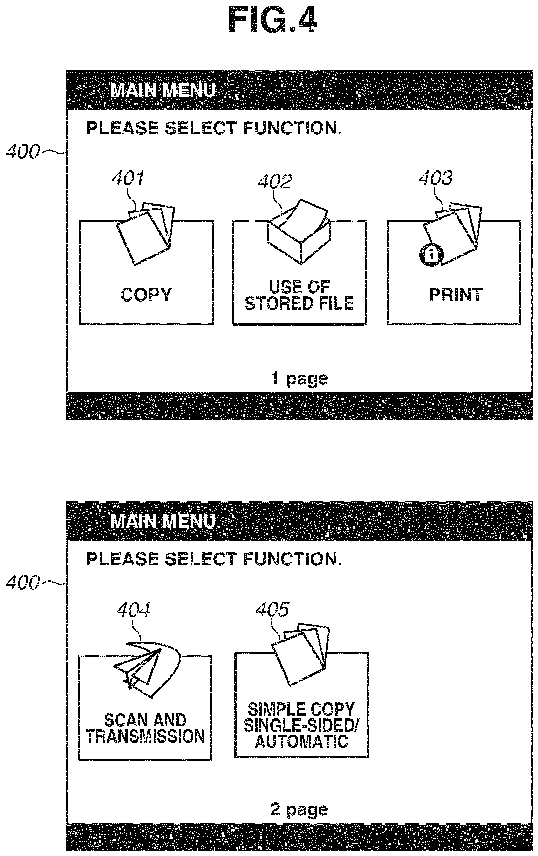

A menu function unit 203 controls display of the application selection screen, which is a menu screen in which buttons (software keys or display objects) to perform respective applications are arranged. Fig. 4 illustrates an example of an application selection screen 400. When a user presses a copy button 401, a copy setting screen is displayed. When the user performs setting in the setting screen and then instructs execution, the image processing apparatus 100 starts copy processing. When the application selection screen is displayed, information about arrangement of buttons to be displayed is notified from a button rearrangement execution unit 204 to the menu function unit 203. In a case where rearrangement of the buttons is necessary, the button rearrangement execution unit 204 notifies the menu function unit 203 of a display order of the application buttons after rearrangement, and the menu function unit 203 displays the screen based on the display order. In a case where the rearrangement is unnecessary, the menu function unit 203 displays a screen in which the buttons are not rearranged, based on a display order of the buttons stored in the button rearrangement execution unit 204 or the menu function unit 203. The menu function unit 203 receives the information about arrangement of the buttons from the button rearrangement execution unit 204 as necessary even while the application selection screen 400 is displayed.

The button rearrangement execution unit 204 determines the arrangement order of the buttons displayed on the application selection screen based on, for example, a state of the image processing apparatus 100 or an occurring event detected by the document detection unit 201 or the print job detection unit 202. The button rearrangement execution unit 204 then notifies the menu function unit 203 of the determined arrangement order of the buttons.

An application button information management unit 205 manages information on the buttons (software keys) displayed on the application selection screen. The information on the buttons may be stored in the HDD 1004 of the image processing apparatus 100, or in an external storage device connected via the network I/F 1008.

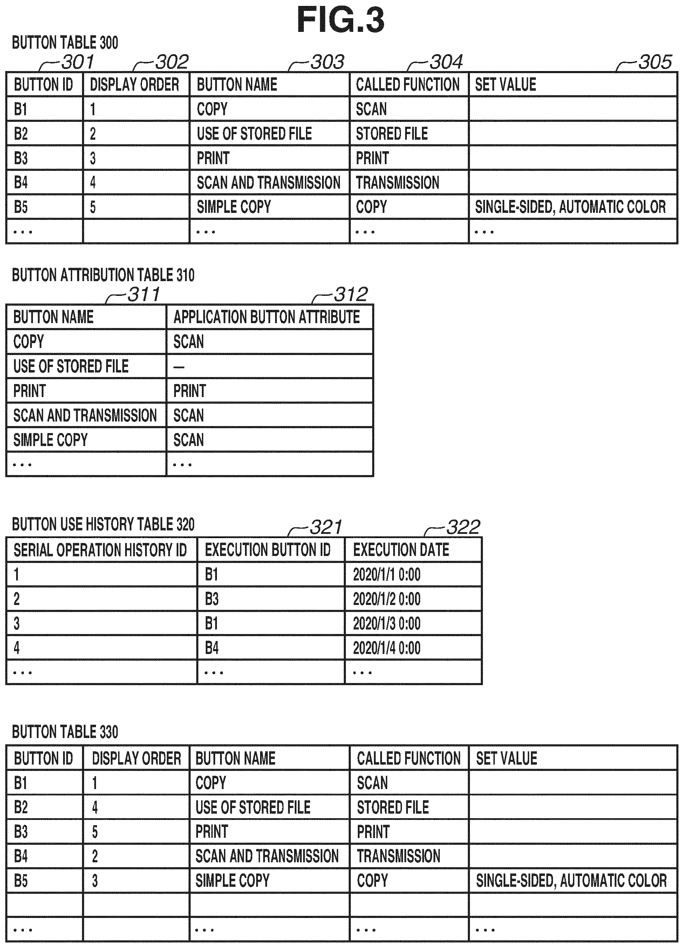

Examples of the information managed by the application button information management unit 205 are described with reference to tables in Fig. 3.

A button table 300 is a table illustrating the information about the buttons displayed on the application selection screen, and defines one button by one row. A button identification (ID) column 301 indicates identifiers of the respective buttons. A display order column 302 indicates a display order of the buttons in the application selection screen. A button name column 303 indicates texts displayed on the respective buttons. A called function column 304 indicates functions called when the respective buttons are pressed. A set value column 305 indicates a set value called with the function when the corresponding button is pressed. The application selection screen 400 in Fig. 4 is displayed based on the button information defined by the button table 300. The buttons are displayed in order from left of the application selection screen 400, based on the display order defined in the display order column 302. At this time, it is unnecessary to display all of the buttons defined in the button table 300, on the application selection screen.

A button attribute table 310 is a table defining attributes of the respective buttons, and is a table used to change the arrangement order of the buttons in the application selection screen based on the state of the image processing apparatus 100. Buttons to perform processing using the scanner 1011 of the image processing apparatus 100, such as a "copy" button and a "scan and transmission" button, are each associated with a "scan" attribute. A "print" button is associated with a "print" attribute. For example, when the user places a sheet in the feeder of the image processing apparatus 100, the document detection unit 201 detects placement of the document, and the button rearrangement execution unit 204 performs control to bring forward the display order of the buttons each having the scan attribute, with reference to the button attribute table 310. In other words, when the user only places the document in the feeder of the image processing apparatus 100, the buttons to perform processing using the scanner 1011 are automatically rearranged forward. A button table 330 is a table in which the buttons are rearranged from the arrangement of the buttons illustrated in the button table 300. The rearrangement occurs when a document is placed on the scanner 1011 and the arrangement order of buttons are changed. The display order of the buttons each having the "scan" attribute, such as the "copy" button and the "scan and transmission" button, is brought forward, and the display order of the other buttons is accordingly brought backward. As described above, automatic rearrangement of the buttons in the menu screen based on the state of the apparatus makes the user easily find the desired button. Likewise, in a case where the user transmits a print job to the image processing apparatus 100, the "print" button having the "print" attribute is displayed forward.

The example in which the buttons are rearranged based on the state of the image processing apparatus 100 is described; however, the rearrangement is not limited thereto. The buttons may be automatically rearranged such that the buttons frequently used are preferentially displayed based on the number of use times of the buttons by the user. In this case, the application button information management unit 205 stores a button use history of the user in a button use history table 320, and the button rearrangement execution unit 204 rearranges the buttons such that the buttons frequently used are preferentially displayed based on the button use history.

When predetermined operation is performed by the display/operation unit 1009, a voice mode management unit 206 displays a voice mode startup screen on the display/operation unit 1009, and holds information on a selected voice mode. The predetermined operation is, for example, a long press or a multiple press of a predetermined button.

The voice mode is a mode for a user, such as a blind person or a person with low vision, who uses the apparatus without viewing the screen, and is an accessibility mode of the screen display. Examples of functions of the voice mode include a function to receive settings to read out contents of the screen or a voice instruction, and a function to provide a cursor in the screen and to enable selection of a button through cursor operation with hardware keys such as a numerical keypad. The voice mode management unit 206 notifies the button rearrangement execution unit 204 of the settings of the enabled voice mode. When the voice mode ends, the voice mode management unit 206 notifies the button rearrangement execution unit 204 that the voice mode is disabled. When at least one setting of the voice mode is enabled, the button rearrangement execution unit 204 does not perform the above-described automatic rearrangement of the buttons.

Fig. 4 is a diagram illustrating a screen example of an application selection screen displayed on the display/operation unit 1009 of the image processing apparatus 100 in a default state where the buttons are not rearranged (e.g., a factory shipment state, or a state initially set by administrator), according to the exemplary embodiment of the present invention. The application selection screen is displayed based on the information defined by the button table 300.

A copy button 401 is a button to execute a copy application. When the copy button 401 is pressed, the screen transitions to a copy setting screen.

A use-of-stored-file button 402 is a button to execute application using a stored file. The user selects a file from a file list screen displayed when the user presses the button, and selects processing (print or transmission) for the selected file. As a result, the selected processing is performed on the selected file.

A print button 403 is a button to execute a print application. When the print button 403 is pressed, the screen transitions to a print setting screen.

The above-described three buttons are displayed in a first page of the application selection screen 400. In the second page of the application selection screen 400, a scan-and-transmission button 404 and a simple copy button 405 are displayed. The scan-and-transmission button 404 is a button to execute an application that transmits an image generated by scanning to a designated destination.

The simple copy button 405 is a button to perform copying with preset setting values. When the simple copy button 405 is pressed, copy processing may immediately start without opening a setting screen.

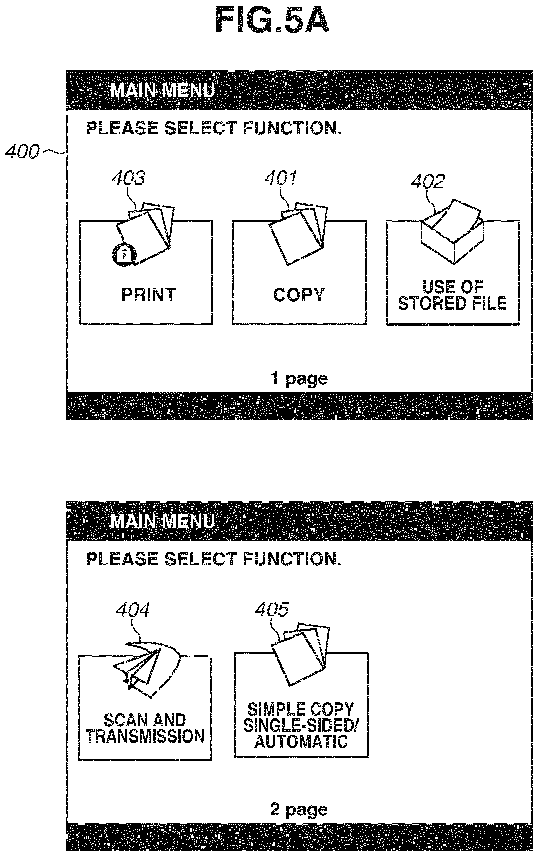

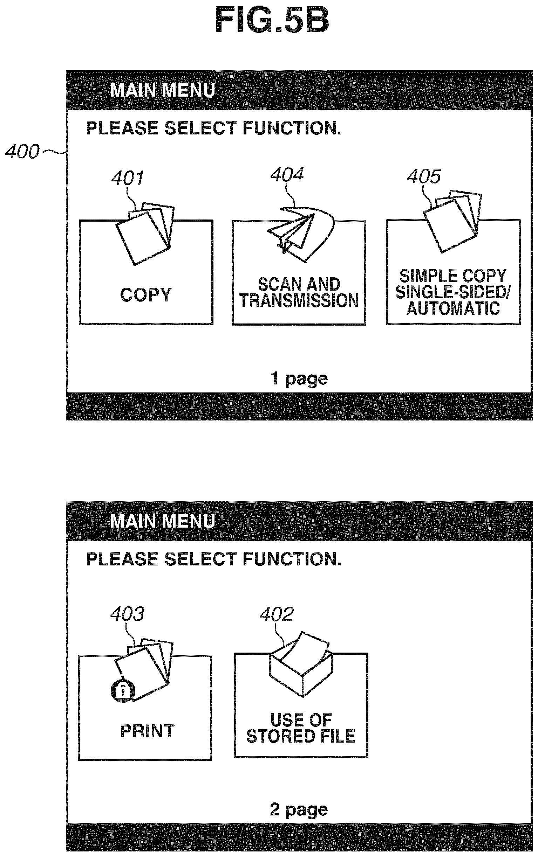

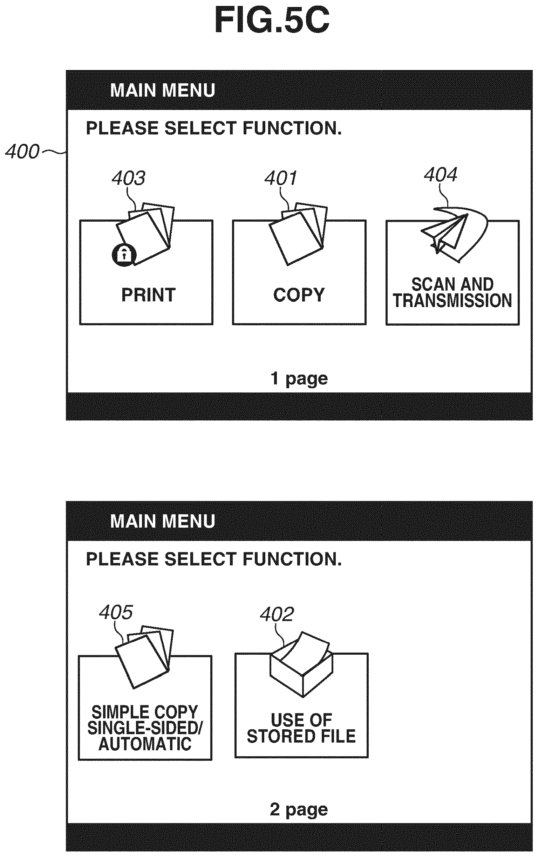

Figs. 5A, 5B, and 5C are diagrams each illustrating a screen example of the application selection screen 400 after the application buttons are rearranged from a default state, displayed on the display/operation unit 1009 of the image processing apparatus 100 according to the exemplary embodiment of the present invention.

The screen in Fig. 5A is first described. Fig. 5A illustrates a screen in which the buttons are rearranged in the application selection screen 400 of Fig. 4 in a case where the print job detection unit 202 detects an unexecuted print job. As compared with the arrangement of the buttons in the application selection screen 400 illustrated in Fig. 4, the print button 403 is rearranged forward. In this specific embodiment, the print button 403 is displayed with a display order attribute of 1, and buttons 401 and 402 each have their display order attributes increased by a value of 1.

Next, the screen in Fig. 5B is described. Fig. 5B illustrates a screen in which the application buttons are rearranged in the application selection screen 400 illustrated in Fig. 4 in a case where the document detection unit 201 detects a document. As compared with the arrangement of the buttons in the application selection screen 400 in Fig. 4, the copy button 401, the scan-and-transmission button 404, and the simple copy button 405 are preferentially displayed more than the other buttons. That is, both the scan-and-transmission button 404, and the simple copy button 405 are moved to appear further up the display order (i.e., their display order attributes are numerically lowered / moved towards a display order attribute of 1) compared to their respective default positions.

Next, the screen in Fig. 5C is described. Fig. 5C illustrates a screen in which the application buttons are rearranged in the application selection screen 400 illustrated in Fig. 4 in a case where the document detection unit 201 detects a document, and further, the print job detection unit 202 detects an unexecuted print job. The print button 403, the copy button 401, the scan-and-transmission button 404, and the simple copy button 405 are preferentially displayed more than the other buttons. In this example, the print button 403, namely, the button having the "print" attribute is preferentially displayed more than the button having the "scan" attribute; however, the buttons may be displayed in the inverted order. Hereinafter, a state where a document is placed on the scanner and a state where an unexecuted print job is held are described as triggers for the rearrangement of the buttons; however, the states as the triggers are not limited thereto. For example, in a case where the image processing apparatus 100 receives a facsimile (FAX) document, a button to perform FAX related processing may be rearranged forward.

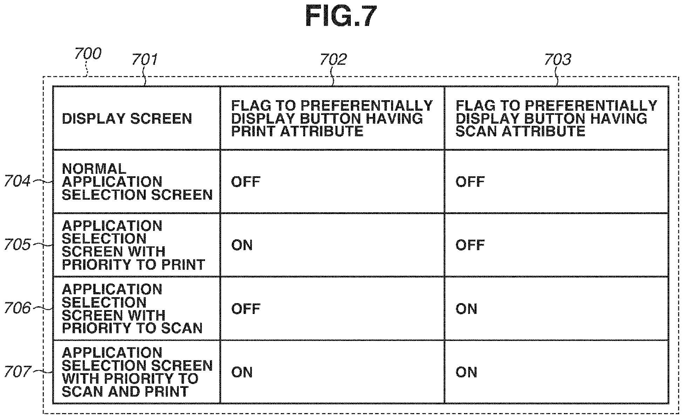

Fig. 7 is a diagram illustrating association of the state of the image processing apparatus 100 and the application selection screen displayed on the display/operation unit 1009 of the image processing apparatus 100 based on the state, according to the exemplary embodiment. The state of the image processing apparatus 100 for application of the present invention and the screen displayed on the display/operation unit 1009 based on the state are not limited thereto.

A table 700 indicates association of the state of the image processing apparatus 100 and the screen displayed on the display/operation unit 1009 based on the state.

A column 701 indicates a screen displayed on the display/operation unit 1009 based on the state of the image processing apparatus 100.

A column 702 indicates a state of a flag to preferentially display the button having the print attribute. When the print job detection unit 202 detects the unexecuted print job, the flag is turned on.

A column 703 indicates a state of a flag to preferentially display the button having the scan attribute. When the document detection unit 201 detects that a document is placed on the scanner, the flag is turned on.

A row 704 indicates an application selection screen displayed in a case where the above-described two flags are off. The application selection screen to be displayed is the default screen illustrated in Fig. 4.

A row 705 indicates an application selection screen displayed in a case where only the flag to preferentially display the button having the print attribute is on. In this example, the screen is referred to as an application selection screen with priority to print, and corresponds to the application selection screen illustrated in Fig. 5A.

A row 706 indicates an application selection screen displayed in a case where only the flag to preferentially display the button having the scan attribute is on. In this example, the screen is referred to as an application selection screen with priority to scan, and corresponds to the application selection screen illustrated in Fig. 5B.

A row 707 indicates an application selection screen displayed in a case where the two flags are on. In this example, the screen is referred to as an application selection screen with priority to scan and print, and corresponds to the application selection screen illustrated in Fig. 5C.

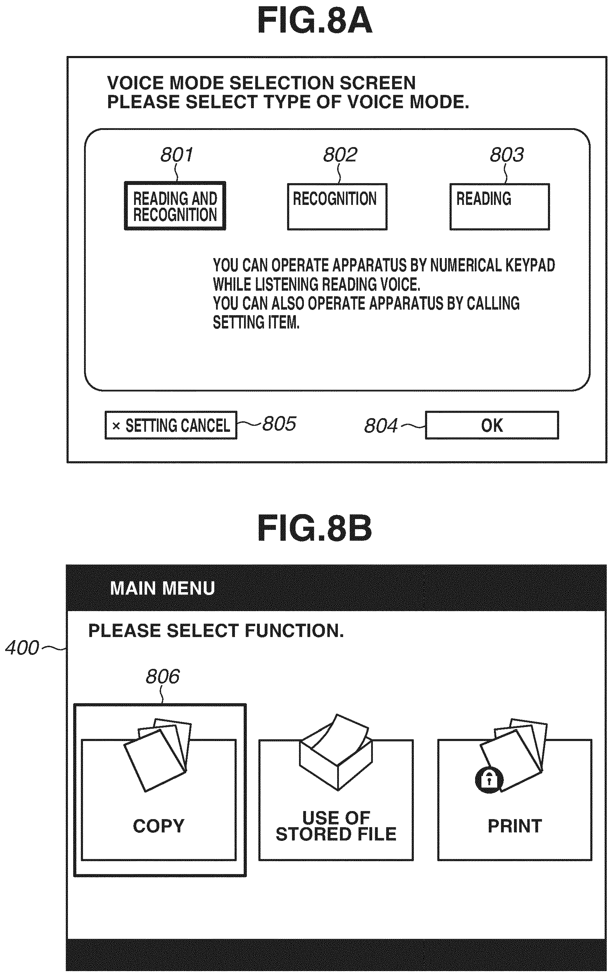

Figs. 8A and 8B are diagrams each illustrating a setting screen example to set the voice mode of the image processing apparatus 100 according to the exemplary embodiment of the present invention. In the following, a method of starting up the voice mode according to the first exemplary embodiment is described with reference to Figs. 8A and 8B.

Fig. 8A illustrates a voice mode setting screen displayed on the display/operation unit 1009 by the voice mode management unit 206. The voice mode setting screen is displayed when predetermined operation is performed through the display/operation unit 1009, and is displayed every time the voice mode is started up. The screen is displayed, for example, when the user using the image processing apparatus 100 long-presses or presses multiple times a predetermined hardware key of the image processing apparatus 100. Fig. 8A illustrates a state where a button 801 is selected. The button 801 is a selection button to turn on both a voice reading function and a voice utterance operation function of the voice mode. The voice reading function is a function in which contents of the screen displayed on the display/operation unit 1009 are read out. The function is provided to a user, such as a person with low vision or a blind person, who may not be able to clearly view the screen to operate the image processing apparatus 100. The function enables the user to operate the image processing apparatus 100 not by using the touch panel operation unit of the display/operation unit 1009 of the image processing apparatus 100 but by using the numerical keypad relying on voice guidance. A cursor is displayed in the screen, and the user moves the cursor by using the hardware keys such as the numerical keypad, to select a button. Examples of the voice guidance read out include a name of the button currently selected by the cursor, and a setting value currently set.

The voice utterance operation function is a function in which voice of the user is recognized and the image processing apparatus 100 is operated based on the recognition. For example, the voice "copy" uttered by the user is recognized, and the copy application is started up. A button 802 is a selection button to turn on only the voice utterance operation function. A button 803 is a selection button to turn on only the voice reading function. A button 804 is a button to start up the voice mode selected by any of the buttons 801, 802, and 803. A button 805 is a button to cancel startup of the voice mode. The functions of the voice mode are not limited to the above-described functions as long as the functions are accessibility functions provided to the user, such as a person with low vision or a blind person, who uses the apparatus without viewing the screen. Examples of the other function include a function in which a cursor is provided in the screen and a cursor is operated with hardware keys such as a numerical keypad to select a button.

Fig. 8B illustrates the application selection screen 400 displayed in a case where the voice reading function is started. The screen illustrated in Fig. 8B is displayed on the display/operation unit 1009 when the button 804 is pressed after the voice reading function is selected in the screen of Fig. 8A.

A cursor 806 is a selection cursor indicating the button currently selected. A name of the button indicated by the selection cursor 806 is read out. In the example illustrated in Fig. 8B, "copy" is read out. The selection cursor 806 can be moved by using the hardware keys or the numerical keypad of the display/operation unit 1009.

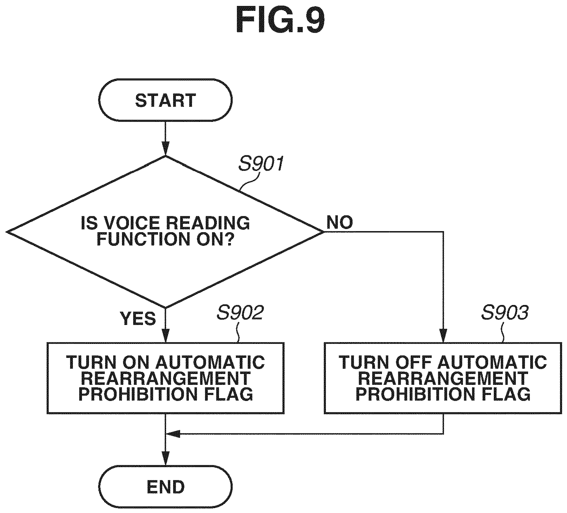

Fig. 9 is a flowchart illustrating processing to switch a flag whether to permit automatic rearrangement of the buttons in the application selection screen 400, based on whether the voice reading function of the image processing apparatus 100 operates, according to the exemplary embodiment of the present invention. The processing of the flowchart is constantly performed in a loop while the image processing apparatus 100 operates. Each of steps in Fig. 9 is processed when the CPU 1001 of the image processing apparatus 100 executes a corresponding program. The programs to be executed are loaded from the ROM 1002 and are executed.

In step S901, the voice mode management unit 206 determines whether the voice reading function of the image processing apparatus 100 is on. In a case where the button 801 or 803 is selected in the screen of Fig. 8A, it is determined that the voice reading function is on. In a case where it is determined that the voice reading function is on (YES in step S901), the processing proceeds to step S902. Otherwise (NO in step S901), the processing proceeds to step S903.

In step S902, the button rearrangement execution unit 204 turns on a prohibition flag to prohibit rearrangement of the buttons in the application selection screen. Thereafter, the processing ends. The flag is stored in the RAM 1003.

In step S903, the button rearrangement execution unit 204 turns off the prohibition flag to prohibit rearrangement of the buttons in the application selection screen. Thereafter, the processing ends. The flag is stored in the RAM 1003.

According to the above-described processing, rearrangement of the buttons can be disabled, in the case where the voice reading function is enabled. In the case where the voice reading function is disabled, rearrangement of the buttons can be enabled. In this example, the flag to enable/disable rearrangement of the buttons is switched based on on/off of the voice reading function; however, the trigger to switch the flag is not limited thereto. The method is not limited as long as the flag to enable/disable rearrangement of the button is switched in the case where at least one of accessibility function about the screen display is enabled. The flag to enable/disable rearrangement of the buttons may be switched based on, for example, on/off of the voice utterance operation function.

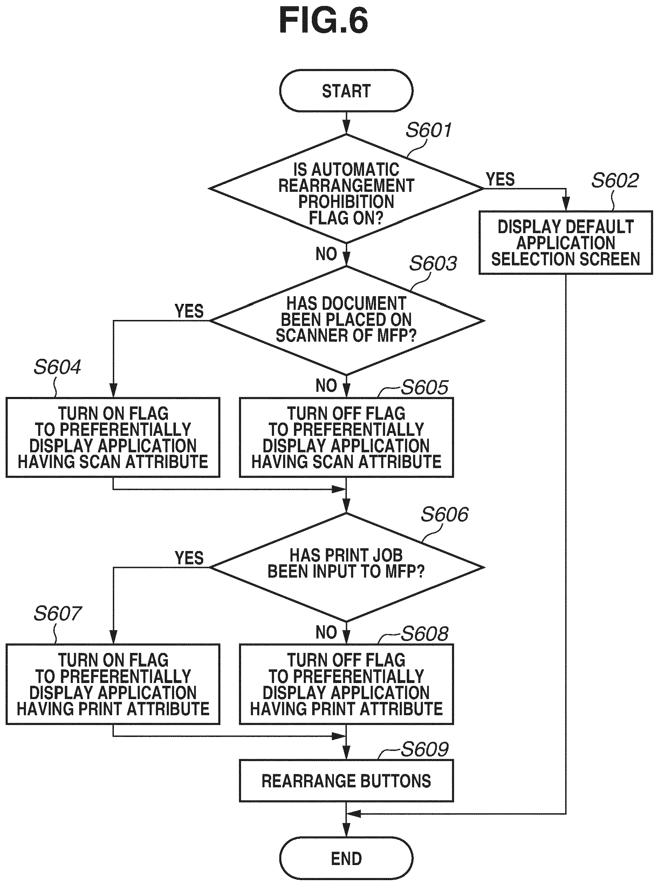

Fig. 6 is a flowchart illustrating processing to rearrange the application buttons in the application selection screen 400 based on the state of the image processing apparatus and the enabled/disabled state of the voice reading function, according to the embodiment of the present invention. The flowchart is started when the image processing apparatus 100 displays the application selection screen, and is constantly performed in a loop while the application selection screen is displayed.

The application selection screen is displayed, for example, when it is detected that the user is present in front of the image processing apparatus 100, when the user operates the display/operation unit 1009, and when user authentication is performed. Each of steps illustrated in Fig. 6 is processed when the CPU 1001 of the image processing apparatus 100 executes a corresponding program. The programs to be executed are loaded from the ROM 1002 and are executed.

In step S601, the button rearrangement execution unit 204 determines whether the automatic rearrangement prohibition flag is on. In the case where the voice reading function is enabled, the automatic rearrangement prohibition flag is turned on by the processing in the flowchart of Fig. 9. In a case where the automatic rearrangement prohibition flag is on (YES in step S601), the processing proceeds to step S602. Otherwise (NO in step S601), the processing proceeds to step S603.

In step S602, the menu function unit 203 displays the default application selection screen (Fig. 4) in which the buttons are not rearranged. Even if the arrangement order of the buttons is changed before the processing, the arrangement of the buttons is returned to the default arrangement. Further, at this time, the button rearrangement execution unit 204 does not change the arrangement order of the buttons. In other words, the application selection screen in Fig. 4 is displayed at this time, and even if the user places a document or inputs a print job, the arrangement of the buttons is not changed from the arrangement illustrated in Fig. 4.

In step S603, the button rearrangement execution unit 204 determines whether a document has been placed on the scanner 1011 of the image processing apparatus 100. To perform the determination, the button rearrangement execution unit 204 acquires a state indicating whether a document is placed, from the document detection unit 201. In a case where a document is placed (YES in step S603), the processing proceeds to step S604. In a case where no document is placed (NO in step S603), the processing proceeds to step S605.

**In** step S604, the button rearrangement execution unit 204 turns on a flag to preferentially display the button having the "scan" attribute. The flag is stored in the RAM 1003, and is turned on or off by the button rearrangement execution unit 204.

**In** step S605, the button rearrangement execution unit 204 turns off the flag to preferentially display the button having the "scan" attribute.

**In** step S606, the button rearrangement execution unit 204 determines whether a print job has been input to the image processing apparatus 100. To perform the determination, the button rearrangement execution unit 204 acquires a state indicating whether an unexecuted print job is present, from the print job detection unit 202. In a case where an unexecuted print job is present (YES in step S606), the processing proceeds to step S607. In a case where no unexecuted print job is present (NO in step S606), the processing proceeds to step S608.

In step S607, the button rearrangement execution unit 204 turns on a flag to preferentially display the button having the "print" attribute. The flag is stored in the RAM 1003, and is turned on or off by the button rearrangement execution unit 204.

In step S608, the button rearrangement execution unit 204 turns off the flag to preferentially display the button having the "print" attribute.

In step S609, the button rearrangement execution unit 204 determines the arrangement order of the buttons with reference to the flag operated in step S604, S605, S607, or S608. The menu function unit 203 displays the application selection screen based on the determined arrangement order of the buttons.

In this example, it is determined whether the automatic rearrangement prohibition flag is on at the timing of step S602; however, the determination timing is not limited thereto. The determination may be performed, for example, at a timing before the step S609.

The buttons are rearranged by the above-described processing, which enables the user who searches for a desired button while viewing the screen, to easily find the desired button. In contrast, for a user, such as a blind person or a person with low vision, who searches for the desired button without viewing the screen, the default application selection screen is displayed and the buttons are not rearranged, which makes it possible to prevent deterioration of the operability. Users who search for the desired button without viewing the screen often memorize the arrangement of the buttons. Even when a blind person or a person with low vision turns on the voice reading function, the blind person or the person with low vision is unlikely to check the arrangement of the buttons by causing the apparatus to read out names of all of the buttons displayed in the application selection screen every time they use the apparatus. This is because reading all of the buttons is a time consuming process. Such a user instead memorizes the arrangement and the positions of the buttons as the user uses the apparatus a plurality of times, and selects the desired button by operating the cursor based on the user's memory. For such a user, a menu screen with a fixed arrangement order is preferably provided.

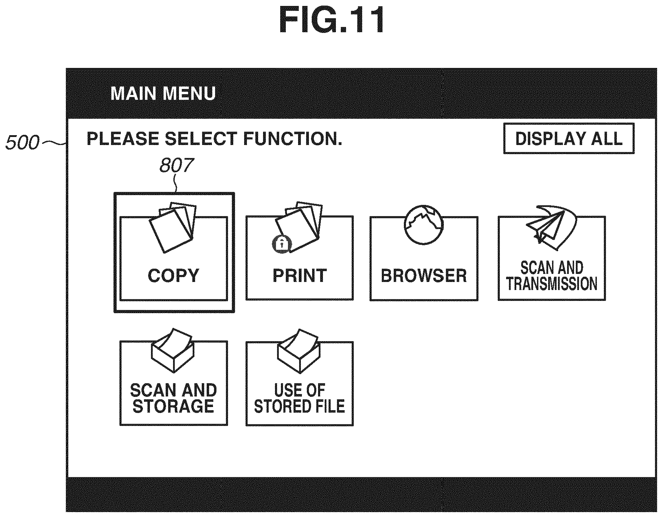

In the first exemplary embodiment, it is determined to automatically rearrange the buttons based on the enabled/disabled state of the voice reading function. The image processing apparatus may originally include both a function to provide a menu screen in which the buttons are automatically rearranged and a function to provide a menu screen in which the arrangement order of the buttons is fixed. There is a case where one image processing apparatus can provide (1) a mode providing a menu screen in which the buttons displayed in one page is reduced as with the application selection screen in Fig. 4, and the buttons are automatically rearranged to enable the user to easily use the image processing apparatus without hesitating, and (2) a mode providing a menu screen in which a number of buttons are displayed in one page as with an application selection screen in Fig. 11, and the arrangement order of the buttons is fixed. In this case, a method of switching the menu screen to an appropriate menu screen based on on/off of the voice reading function is described. A basic configuration in a second exemplary embodiment is the same as the basic configuration in the first exemplary embodiment. Thus, differences between the two embodiments are only described.

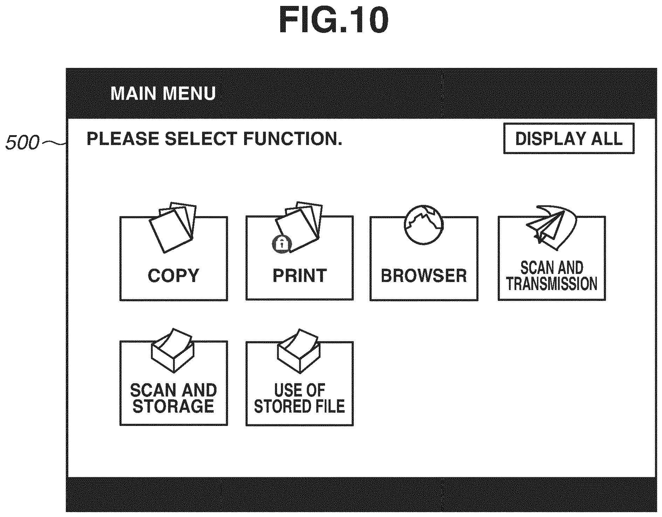

Fig. 10 is a diagram illustrating a screen example of an application selection screen in a mode in which the buttons displayed in the display/operation unit 1009 of the image processing apparatus 100 are not rearranged, according to the second exemplary embodiment.

In an application selection screen 500, buttons are not rearranged based on, for example, the state of the apparatus. The menu function unit 203 switches whether to display the application selection screen 400 or the application selection screen 500 based on the user or an environment. For example, an administrator of the image processing apparatus 100 may set whether to display the application selection screen 400 or the application selection screen 500. Furthermore, the user may switch the application selection screen 400 and the application selection screen 500 through, for example, the setting screen.

Fig. 11 illustrates the application selection screen 500 displayed on the image processing apparatus 100 in the case where the voice reading function is started according to the present exemplary embodiment. The screen illustrated in Fig. 11 is displayed on the display/operation unit 1009 when the button 804 is pressed after the voice reading function is selected in the screen of Fig. 8A.

A cursor 807 is a selection cursor indicating the button currently selected. A name of the button indicated by the selection cursor 807 is read out. In the example of Fig. 11, "copy" is read out. The selection cursor 807 can be moved by using, for example, the numerical keypad of the display/operation unit 1009.

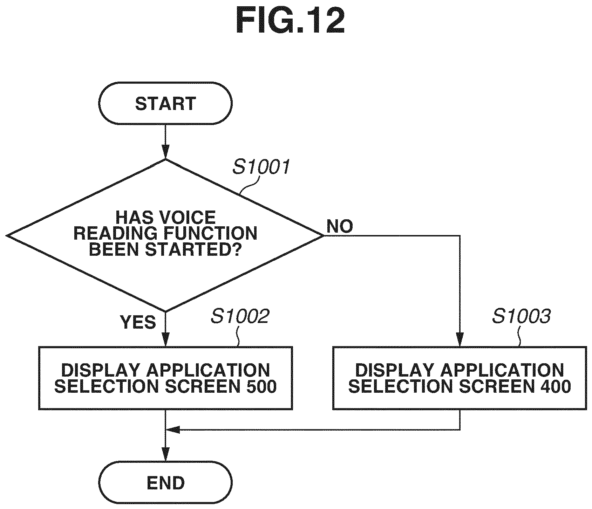

Fig. 12 is a flowchart illustrating display screen switching processing at a start of the voice reading function in the image processing apparatus 100 that provides the application selection screen 400 and the application selection screen 500, according to the exemplary embodiment of the present invention. The flowchart is constantly performed in a loop while the image processing apparatus 100 operates. Each of steps in Fig. 12 is processed when the CPU 1001 of the image processing apparatus 100 executes a corresponding program. The programs to be executed are loaded from the ROM 1002 and are executed.

In step S1001, the voice mode management unit 206 determines whether the voice reading function has been started. In a case where the voice reading function has been started (YES in step S1001), the processing proceeds to step S1002. In a case where the voice reading function has not been started (NO in step S1001), the processing proceeds to step S1003.

In step S1002, the voice mode management unit 206 instructs the menu function unit 203 or the button rearrangement execution unit 204 to display the application selection screen 500.

In step S1003, the voice mode management unit 206 instructs the menu function unit 203 or the button rearrangement execution unit 204 to display the application selection screen 400. In the case where the application selection screen 400 is displayed, the buttons are automatically rearranged by the processing in and after step S603 in the flowchart of Fig. 6.

By using the above-described processing in the flowchart, it is possible to provide an appropriate application selection screen to the user based on the enabled/disabled state of the voice reading function.

In the above-described exemplary embodiments, change of the state of the image processing apparatus 100 is described as an example of the condition to rearrange the software keys; however, the condition is not limited thereto. For example, the application buttons frequently used by the user may be preferentially rearranged by using, for example, information on user operation history of the image processing apparatus 100.

In the above-described exemplary embodiments, the image processing apparatus 100 including the plurality of functions such as the copy function and the scanner function is described as an example; however, the present invention is also applicable to an image processing apparatus including some of the functions. Further, the present invention may be applied to other information processing apparatuses, such as a personal computer, a portable digital assistant (PDA), a mobile phone, a facsimile (FAX), a camera, a video camera, and an image viewer.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. An information processing apparatus including a plurality of functions, the information processing apparatus comprising:
a first display control means for displaying, on a screen, a plurality of software keys each corresponding to a different function of the plurality of functions; and
a rearrangement means for performing rearrangement processing for rearranging the plurality of software keys so that, based on a state of the information processing apparatus, a software key related to the state of the information processing apparatus is preferentially displayed among the plurality of software keys,
**characterized in that** even in a case where the state of the information processing apparatus is a state where the rearrangement processing is performed by the rearrangement means so that the software key related to the state of the information processing apparatus is preferentially displayed among the plurality of software keys, the rearrangement means is configured to return the rearrangement of said plurality of software keys to a default arrangement when at least one predetermined function for a user to use the information processing apparatus without viewing the screen is in an enabled state.

2. The information processing apparatus according to claim 1,
wherein, in the case where at least one function for a user who uses the information processing apparatus without viewing the screen is enabled, the rearrangement means does not rearrange the plurality of software keys.

3. The information processing apparatus according to claim 1 or claim 2, wherein the function for a user who users the information processing apparatus without viewing the screen comprises a voice reading function to read out contents displayed on the screen.

4. The information processing apparatus according to any preceding claim, wherein the function for a user who users the information processing apparatus without viewing the screen comprises a function to select any of the plurality of software keys displayed on the screen by a cursor.

5. The information processing apparatus according to any preceding claim, further comprising:
a second display control means for displaying a setting screen to enable or disable at least one function for a user who users the information processing apparatus without viewing the screen; and
a storage means for storing setting received in the setting screen.

6. The information processing apparatus according to any preceding claim, wherein the rearrangement means preferentially displays at least one of the plurality of software keys.

7. The information processing apparatus according to any preceding claim, wherein the rearrangement means automatically rearranges the plurality of software keys based on a state of the information processing apparatus.

8. The information processing apparatus according to any preceding claim, wherein the information processing apparatus is an image processing apparatus including at least one of a scan function and a print function.

9. The information processing apparatus according to any preceding claim, wherein the rearrangement means rearranges the plurality of software keys to preferentially display a software key satisfying a predetermined condition among the plurality of software keys, based on detection that a document is placed on a document reading means of the information processing apparatus.

10. The information processing apparatus according to any preceding claim, wherein the rearrangement means rearranges the plurality of software keys to preferentially display a software key satisfying a predetermined condition among the plurality of software keys, based on detection that the information processing apparatus holds a print job.

11. The information processing apparatus according to any preceding claim, wherein the plurality of functions comprise both a function to provide a menu screen to automatically rearrange the plurality of software keys and a function to provide a menu screen to fix an arrangement of the plurality of software keys.

12. The information processing apparatus according to claim 11, wherein the first display control means displays the menu screen to fix an arrangement of the plurality of software keys based on at least one function for a user who uses the information processing apparatus without viewing the screen being enabled.

13. The information processing apparatus according to claim 1 or claim 2, wherein the function for a user who uses the information processing apparatus without viewing the screen comprises both a voice utterance operation function in which voice uttered by the user is recognized and the information processing apparatus is operated in accordance with the recognized voice, and a voice reading function to read out contents displayed on the screen.

14. The information processing apparatus according to any preceding claim, wherein the screen before the rearrangement means rearranges the plurality of software keys is a screen of the information processing apparatus in a factory shipment state.

15. The information processing apparatus according to any preceding claim, wherein the screen before the rearrangement means rearranges the plurality of software keys is a screen in a default state of the information processing apparatus.

16. The information processing apparatus according to claim 1, wherein the first display control means displays a screen in a default state where the plurality of software keys is arranged at default positions based on the at least one of the predetermined functions for the user who uses the information processing apparatus without visually recognizing the screen of the information processing apparatus being enabled.

17. A method of controlling an information processing apparatus including a plurality of functions, the method comprising:
displaying, on a screen, a plurality of software keys each corresponding to a different function of the plurality of functions; and
performing rearrangement processing for rearranging the plurality of software keys so that, based on a state of the information processing apparatus, a software key related to the state of the information processing apparatus is preferentially displayed among the plurality of software keys,
**characterized in that** even in a case where the state of the information processing apparatus is a state where the rearrangement processing is performed by the rearrangement means so that the software key related to the state of the information processing apparatus is preferentially displayed among the plurality of software keys, the method further comprises the step of:
returning the rearrangement of said plurality of software keys to a default arrangement when at least one predetermined function for a user to use the information processing apparatus without viewing the screen is in an enabled state.

18. A computer-readable storage medium comprising instructions which, when executed by a computer, cause the computer to carry out the method of claim 17.

## Patentansprüche

1. Informationsverarbeitungsvorrichtung mit mehreren Funktionen, wobei die Informationsverarbeitungsvorrichtung umfasst:
eine erste Anzeigesteuereinrichtung zum Anzeigen mehrerer Softwaretasten, die jeweils einer anderen Funktion der mehreren Funktionen entsprechen, auf einem Bildschirm; und
eine Neuanordnungseinrichtung zum Durchführen einer Neuanordnungsverarbeitung zum Neuanordnen der mehreren Softwaretasten, so dass basierend auf einem Zustand der Informationsverarbeitungsvorrichtung eine Softwaretaste, welche mit dem Zustand der Informationsverarbeitungsvorrichtung in Zusammenhang steht, unter den mehreren Softwaretasten bevorzugt angezeigt wird,
**dadurch gekennzeichnet, dass** selbst in einem Fall, in welchem der Zustand der Informationsverarbeitungsvorrichtung ein Zustand ist, in welchem die Neuanordnungsverarbeitung durch die Neuanordnungseinrichtung durchgeführt wird, so dass die Softwaretaste, welche in Zusammenhang mit dem Zustand der Informationsverarbeitungsvorrichtung steht, unter den mehreren Softwaretasten bevorzugt angezeigt wird, die Neuanordnungseinrichtung konfiguriert ist, die Neuanordnung der mehreren Softwaretasten auf eine Standardanordnung zurückzusetzen, wenn sich mindestens eine vorbestimmte Funktion für einen Benutzer, die Informationsverarbeitungsvorrichtung zu verwenden, ohne den Bildschirm zu betrachten, in einem aktivierten Zustand befindet.

2. Informationsverarbeitungsvorrichtung nach Anspruch 1, wobei in dem Fall, in welchem mindestens eine Funktion für einen Benutzer, welcher die Informationsverarbeitungsvorrichtung verwendet, ohne den Bildschirm zu betrachten, aktiviert ist, die Neuanordnungseinrichtung die mehreren Softwaretasten nicht neu anordnet.

3. Informationsverarbeitungsvorrichtung nach Anspruch 1 oder Anspruch 2, wobei die Funktion für einen Benutzer, welcher die Informationsverarbeitungsvorrichtung verwendet, ohne den Bildschirm zu betrachten, eine Sprachvorlesefunktion umfasst, um Inhalte, welche auf dem Bildschirm angezeigt werden, vorzulesen.

4. Informationsverarbeitungsvorrichtung nach einem der vorhergehenden Ansprüche,
wobei die Funktion für einen Benutzer, welcher die
Informationsverarbeitungsvorrichtung verwendet, ohne den Bildschirm zu betrachten, eine Funktion umfasst, eine der mehreren Softwaretasten, welche auf dem Bildschirm angezeigt werden, durch einen Cursor auszuwählen.

5. Informationsverarbeitungsvorrichtung nach einem der vorhergehenden Ansprüche, ferner umfassend:
eine zweite Anzeigesteuereinrichtung zum Anzeigen eines Einstellungsbildschirms, um mindestens eine Funktion für einen Benutzer, welcher die Informationsverarbeitungsvorrichtung verwendet, ohne den Bildschirm zu betrachten, zu aktivieren oder zu deaktivieren; und
eine Speichereinrichtung zum Speichern einer Einstellung, welche im Einstellungsbildschirm empfangen wird.

6. Informationsverarbeitungsvorrichtung nach einem der vorhergehenden Ansprüche,
wobei die Neuanordnungseinrichtung mindestens eine der mehreren Softwaretasten bevorzugt anzeigt.

7. Informationsverarbeitungsvorrichtung nach einem der vorhergehenden Ansprüche,
wobei die Neuanordnungseinrichtung die mehreren Softwaretasten basierend auf einem Zustand der Informationsverarbeitungsvorrichtung automatisch neu anordnet.

8. Informationsverarbeitungsvorrichtung nach einem der vorhergehenden Ansprüche,
wobei die Informationsverarbeitungsvorrichtung eine Bildverarbeitungsvorrichtung ist, die eine Scanfunktion und/oder eine Druckfunktion enthält.

9. Informationsverarbeitungsvorrichtung nach einem der vorhergehenden Ansprüche,
wobei die Neuanordnungseinrichtung die mehreren Softwaretasten neu anordnet, um eine Softwaretaste, die eine vorbestimmte Bedingung erfüllt, unter den mehreren Softwaretasten basierend auf einer Detektion, dass ein Dokument auf einer Dokumentenleseeinrichtung der Informationsverarbeitungsvorrichtung platziert ist, bevorzugt anzuzeigen.

10. Informationsverarbeitungsvorrichtung nach einem der vorhergehenden Ansprüche,
wobei die Neuanordnungseinrichtung die mehreren Softwaretasten neu anordnet, um eine Softwaretaste, die eine vorbestimmte Bedingung erfüllt, unter den mehreren Softwaretasten basierend auf einer Detektion, dass die Informationsverarbeitungsvorrichtung einen Druckauftrag vorhält, bevorzugt anzuzeigen.

11. Informationsverarbeitungsvorrichtung nach einem der vorhergehenden Ansprüche,
wobei die mehreren Funktionen sowohl eine Funktion zum Bereitstellen eines Menübildschirms, um die mehreren Softwaretasten automatisch neu anzuordnen, als auch eine Funktion zum Bereitstellen eines Menübildschirms, um eine Anordnung der mehreren Softwaretasten zu fixieren, umfassen.

12. Informationsverarbeitungsvorrichtung nach Anspruch 11, wobei die erste Anzeigesteuereinrichtung den Menübildschirm anzeigt, um eine Anordnung der mehreren Softwaretasten zu fixieren, basierend darauf, dass mindestens eine Funktion für einen Benutzer, welcher die Informationsverarbeitungsvorrichtung verwendet, ohne den Bildschirm zu betrachten, aktiviert ist.

13. Informationsverarbeitungsvorrichtung nach Anspruch 1 oder Anspruch 2, wobei die Funktion für einen Benutzer, welcher die Informationsverarbeitungsvorrichtung verwendet, ohne den Bildschirm zu betrachten, sowohl eine Sprachäußerungsbedienfunktion, bei welcher Gesprochenes, das durch den Benutzer geäußert wird, erkannt wird und die Informationsverarbeitungsvorrichtung gemäß dem erkannten Gesprochenen bedient wird, als auch eine Sprachvorlesefunktion, um Inhalte, welche auf dem Bildschirm angezeigt werden, vorzulesen, umfasst.

14. Informationsverarbeitungsvorrichtung nach einem der vorhergehenden Ansprüche,
wobei der Bildschirm, bevor die Neuanordnungseinrichtung die mehreren Softwaretasten neu anordnet, ein Bildschirm der Informationsverarbeitungsvorrichtung in einem Fabrikauslieferungszustand ist.

15. Informationsverarbeitungsvorrichtung nach einem der vorhergehenden Ansprüche,
wobei der Bildschirm, bevor die Neuanordnungseinrichtung die mehreren Softwaretasten neu anordnet, ein Bildschirm in einem Standardzustand der Informationsverarbeitungsvorrichtung ist.

16. Informationsverarbeitungsvorrichtung nach Anspruch 1, wobei die erste Anzeigesteuereinrichtung einen Bildschirm in einem Standardzustand anzeigt, in welchem die mehreren Softwaretasten an Standardpositionen angeordnet sind, basierend darauf, dass die mindestens eine der vorbestimmten Funktionen für den Benutzer, welcher die Informationsverarbeitungsvorrichtung verwendet, ohne den Bildschirm der Informationsverarbeitungsvorrichtung visuell zu erkennen, aktiviert ist.

17. Verfahren zum Steuern einer Informationsverarbeitungsvorrichtung mit mehreren Funktionen, wobei das Verfahren umfasst:
Anzeigen mehrerer Softwaretasten, die jeweils einer anderen Funktion der mehreren Funktionen entsprechen, auf einem Bildschirm; und
Durchführen einer Neuanordnungsverarbeitung zum Neuanordnen der mehreren Softwaretasten, so dass basierend auf einem Zustand der Informationsverarbeitungsvorrichtung eine Softwaretaste, welche in Zusammenhang mit dem Zustand der Informationsverarbeitungsvorrichtung steht, unter den mehreren Softwaretasten bevorzugt angezeigt wird,
**dadurch gekennzeichnet, dass** selbst in einem Fall, in welchem der Zustand der Informationsverarbeitungsvorrichtung ein Zustand ist, in welchem die Neuanordnungsverarbeitung durch die Neuanordnungseinrichtung durchgeführt wird, so dass die Softwaretaste, welche in Zusammenhang mit dem Zustand der Informationsverarbeitungsvorrichtung steht, unter den mehreren Softwaretasten bevorzugt angezeigt wird, das Verfahren ferner den folgenden Schritt umfasst:
Zurücksetzen der Neuanordnung der mehreren Softwaretasten auf eine Standardanordnung, wenn sich mindestens eine vorbestimmte Funktion für einen Benutzer, die Informationsverarbeitungsvorrichtung zu verwenden, ohne den Bildschirm zu betrachten, in einem aktivierten Zustand befindet.

18. Computerlesbares Speichermedium, welches Anweisungen umfasst, welche, wenn sie durch einen Computer ausgeführt werden, den Computer veranlassen, das Verfahren nach Anspruch 17 durchzuführen.

## Revendications

1. Appareil de traitement d'informations comprenant une pluralité de fonctions, l'appareil de traitement d'informations comprenant :
un premier moyen de commande d'affichage pour afficher, sur un écran, une pluralité de clés logicielles correspondant chacune à une fonction différente de la pluralité de fonctions ; et
un moyen de réarrangement pour réaliser un traitement de réarrangement pour réarranger la pluralité de clés logicielles de manière que, sur la base d'un état de l'appareil de traitement d'informations, une clé logicielle relative à l'état de l'appareil de traitement d'informations soit affichée de manière préférentielle parmi la pluralité de clés logicielles,
**caractérisé en ce que**, même dans un cas où l'état de l'appareil de traitement d'informations est un état où le traitement de réarrangement est réalisé par le moyen de réarrangement de manière que la clé logicielle relative à l'état de l'appareil de traitement d'informations soit affichée de manière préférentielle parmi la pluralité de clés logicielles, le moyen de réarrangement est configuré pour ramener le réarrangement de ladite pluralité de clés logicielles à un arrangement par défaut quand au moins une fonction prédéterminée pour un utilisateur pour utiliser l'appareil de traitement d'informations sans visualiser l'écran est dans un état activé.

2. Appareil de traitement d'informations selon la revendication 1,
dans lequel, dans un cas où au moins une fonction pour un utilisateur qui utilise l'appareil de traitement d'informations sans visualiser l'écran est activée, le moyen de réarrangement ne réarrange pas la pluralité de clés logicielles.

3. Appareil de traitement d'informations selon la revendication 1 ou la revendication 2, dans lequel la fonction pour un utilisateur qui utilise l'appareil de traitement d'informations sans visualiser l'écran comprend une fonction de lecture vocale pour lire des contenus affichés sur l'écran.

4. Appareil de traitement d'informations selon une quelconque revendication précédente, dans lequel la fonction pour un utilisateur qui utilise l'appareil de traitement d'informations sans visualiser l'écran comprend une fonction pour sélectionner l'une quelconque de la pluralité de clés logicielles affichées sur l'écran par un curseur.

5. Appareil de traitement d'informations selon une quelconque revendication précédente, comprenant en outre :
un second moyen de commande d'affichage pour afficher un écran de paramétrage pour activer ou désactiver au moins une fonction pour un utilisateur qui utilise l'appareil de traitement d'informations sans visualiser l'écran ; et
un moyen de stockage pour stocker un paramétrage reçu dans l'écran de paramétrage.

6. Appareil de traitement d'informations selon une quelconque revendication précédente, dans lequel le moyen de réarrangement affiche de manière préférentielle au moins une de la pluralité de clés logicielles.

7. Appareil de traitement d'informations selon une quelconque revendication précédente, dans lequel le moyen de réarrangement réarrange automatiquement la pluralité de clés logicielles sur la base d'un état de l'appareil de traitement d'informations.

8. Appareil de traitement d'informations selon une quelconque revendication précédente, dans lequel l'appareil de traitement d'informations est un appareil de traitement d'image comprenant au moins une d'une fonction de balayage et d'une fonction d'impression.

9. Appareil de traitement d'informations selon une quelconque revendication précédente, dans lequel le moyen de réarrangement réarrange la pluralité de clés logicielles pour afficher de manière préférentielle une clé logicielle satisfaisant une condition prédéterminée parmi la pluralité de clés logicielles, sur la base d'une détection qu'un document est placé sur un moyen de lecture de document de l'appareil de traitement d'informations.

10. Appareil de traitement d'informations selon une quelconque revendication précédente, dans lequel le moyen de réarrangement réarrange la pluralité de clés logicielles pour afficher de manière préférentielle une clé logicielle satisfaisant une condition prédéterminée parmi la pluralité de clés logicielles, sur la base d'une détection que l'appareil de traitement d'informations maintient une tâche d'impression.

11. Appareil de traitement d'informations selon une quelconque revendication précédente, dans lequel la pluralité de fonctions comprend à la fois une fonction pour fournir un écran de menu pour réarranger automatiquement la pluralité de clés logicielles et une fonction pour fournir un écran de menu pour fixer un arrangement de la pluralité de clés logicielles.

12. Appareil de traitement d'informations selon la revendication 11, dans lequel le premier moyen de commande d'affichage affiche l'écran de menu pour fixer un arrangement de la pluralité de clés logicielles sur la base d'au moins une fonction pour un utilisateur qui utilise l'appareil de traitement d'informations sans visualiser l'écran qui est activée.

13. Appareil de traitement d'informations selon la revendication 1 ou la revendication 2, dans lequel la fonction pour un utilisateur qui utilise l'appareil de traitement d'informations sans visualiser l'écran comprend à la fois une fonction d'opération d'expression vocale dans laquelle une voix exprimée par l'utilisateur est reconnue et l'appareil de traitement d'informations est exploité conformément à la voix reconnue, et une fonction de lecture vocale qui lit des contenus affichés sur l'écran.

14. Appareil de traitement d'informations selon une quelconque revendication précédente, dans lequel l'écran avant que le moyen de réarrangement réarrange la pluralité de clés logicielles est un écran de l'appareil de traitement d'informations dans un état d'expédition de l'usine.

15. Appareil de traitement d'informations selon une quelconque revendication précédente, dans lequel l'écran avant que le moyen de réarrangement réarrange la pluralité de clés logicielles est un écran dans un état par défaut de l'appareil de traitement d'informations.

16. Appareil de traitement d'informations selon la revendication 1, dans lequel le premier moyen de commande d'affichage affiche un écran dans un état par défaut où la pluralité de clés logicielles est arrangée au niveau de positions par défaut sur la base de l'au moins une des fonctions prédéterminées pour l'utilisateur qui utilise l'appareil de traitement d'informations sans reconnaître visuellement l'écran de l'appareil de traitement d'informations qui est activée.

17. Procédé de commande d'un appareil de traitement d'informations comprenant une pluralité de fonctions, le procédé comprenant :
l'affichage, sur un écran, d'une pluralité de clés logicielles correspondant chacune à une fonction différente de la pluralité de fonctions ; et
la réalisation d'un traitement de réarrangement pour réarranger la pluralité de clés logicielles de manière que, sur la base d'un état de l'appareil de traitement d'informations, une clé logicielle relative à l'état de l'appareil de traitement d'informations soit affichée de manière préférentielle parmi la pluralité de clés logicielles,
**caractérisé en ce que**, même dans un cas où l'état de l'appareil de traitement d'informations est un état où le traitement de réarrangement est réalisé par le moyen de réarrangement de manière que la clé logicielle relative à l'état de l'appareil de traitement d'informations soit affichée de manière préférentielle parmi la pluralité de clés logicielles, le procédé comprend en outre l'étape suivante :
le retour du réarrangement de ladite pluralité de clés logicielles à un arrangement par défaut quand au moins une fonction prédéterminée pour un utilisateur pour utiliser l'appareil de traitement d'informations sans visualiser l'écran est dans un état activé.

18. Support de stockage lisible par ordinateur comprenant des instructions qui, quand elles sont exécutées par un ordinateur, amènent l'ordinateur à réaliser le procédé selon la revendication 17.
